# EUROPEAN PATENT APPLICATION

(11) **EP 4 583 208 A1**
(43) Date of publication of application: **09.07.2025**
(21) Application number: 23924570.7
(22) Date of filing: 28.02.2023
(51) Int. Cl.: H01M 4/58

(54) **SILICON-BASED NEGATIVE ELECTRODE ACTIVE MATERIAL, SECONDARY BATTERY AND ELECTRICAL APPARATUS**

(71) Applicant: Contemporary Amperex Technology (Hong Kong) Limited, Central (HK)
(72) Inventor: SU, Yingwei, Ningde, Fujian 352100 (CN); LIU, Liangbin, Ningde, Fujian 352100 (CN); WANG, Jiazheng, Ningde, Fujian 352100 (CN); LV, Zijian, Ningde, Fujian 352100 (CN)
(74) Representative: Jacob, Reuben Ellis
(86) International application number: PCT/CN2023/078666
(87) International publication number: WO 2024/178595

(57) **Abstract**

The present application provides a silicon-based negative electrode active material, the silicon-based negative electrode active material comprising a silicate phase containing an alkaline earth metal element, and the silicon-based negative electrode active material simultaneously containing the K element and the Fe element.

## Description

### TECHNICAL FIELD

This application relates to the field of battery technologies, and in particular, to a silicon-based negative electrode active material, a secondary battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace.

Silicon-based materials, due to their high capacity, are considered as one of the promising negative electrode active materials. Due to the significant development of secondary batteries, higher requirements have been imposed on the electrochemical performance thereof. Therefore, silicon-based negative electrode active materials with better performance are still required in the art.

### SUMMARY

In view of the foregoing issues, this application provides a novel silicon-based negative electrode active material, a secondary battery, and an electric apparatus, which are separately described below.

According to a first aspect, this application provides a silicon-based negative electrode active material. The silicon-based negative electrode active material includes a silicate phase containing an alkaline earth metal element, and the silicon-based negative electrode active material contains both the element K and the element Fe.

In this solution, the silicon-based negative electrode active material contains a combination of the element K and the element Fe. Such specific combination improves the initial coulombic efficiency and kinetic performance of the silicon-based negative electrode active material. The combination of the element K and the element Fe has achieved an unexpected synergistic effect. Technical effects achieved by the combination of them are significantly better than simple addition of technical effects achieved by separated use of them. This application is not limited by the following theory. The presence of the element Fe improves conductivity of active ions and electrons during intercalation/deintercalation of active ions (lithium ions) of the negative electrode active material, inhibits an increase in impedance of a negative electrode during cycling, and improves the rate performance of the material. In addition, potassium silicate generated by reaction of the element K and a silicon-oxygen material helps to improve capacity utilization of the negative electrode active material, thereby improving the initial coulombic efficiency of the secondary battery. Therefore, using the negative electrode active material of this application allows a secondary battery to achieve both high initial coulombic efficiency and good rate performance while having high energy density.

In some embodiments, a content of the element K is greater than a content of the element Fe. Within this proportional range, the element K and the element Fe play an unexpected synergistic effect and significantly improve the initial coulombic efficiency and kinetic performance of the silicon-based negative electrode active material.

In some embodiments, a mass ratio of the element K to the element Fe is greater than or equal to 8:1, optionally 10:1 to 36:1. In this solution, the silicon-based negative electrode active material has improved initial coulombic efficiency and kinetic performance.

In some embodiments, the content of the element K is 400 ppm or above, optionally 800 ppm to 2000 ppm. In this solution, the silicon-based negative electrode active material has improved initial coulombic efficiency and kinetic performance.

In some embodiments, the content of the element Fe is 500 ppm or below, optionally 30 ppm to 400 ppm. In this solution, the silicon-based negative electrode active material has improved initial coulombic efficiency and kinetic performance.

In some embodiments, a median particle size by volume Dᵥ50 of the silicon-based negative electrode active material is 4 µm to 10 µm, optionally 5 µm to 8 µm. In this solution, the silicon-based negative electrode active material has improved kinetic performance.

In some embodiments, a specific surface area of the silicon-based negative electrode active material is 6 m²/g or below, optionally 3 m²/g to 5 m²/g. In this solution, the silicon-based negative electrode active material has improved initial coulombic efficiency.

In some embodiments, a powder volume resistivity of the silicon-based negative electrode active material under a pressure of 4 MPa is 6 Ω·cm or below, optionally 0.5 Ω·cm to 4.5 Ω·cm. In this solution, the silicon-based negative electrode active material has improved kinetic performance.

In some embodiments, a compacted density of the silicon-based negative electrode active material under a pressure of 49000 N is 1.4 g/cm³ to 1.8 g/cm³, optionally 1.5 g/cm³ to 1.7 g/cm³. In this solution, the silicon-based negative electrode active material has improved energy density.

In some embodiments, the silicate phase containing an alkaline earth metal element includes a magnesium-containing silicate phase, and a half-peak width of the magnesium-containing silicate phase is less than or equal to 0.50°. In this solution, the silicon-based negative electrode active material has improved initial coulombic efficiency and kinetic performance.

In some embodiments, the silicate phase containing an alkaline earth metal element includes a magnesium-containing silicate phase, and a grain size of the magnesium-containing silicate phase is less than or equal to 21 nm. In this solution, the silicon-based negative electrode active material has improved capacity utilization and ionic conductivity.

In some embodiments, at least part of a surface of the silicon-based negative electrode active material is provided with a coating layer.

According to a second aspect, this application provides a method for preparing the silicon-based negative electrode active material according to any one of the foregoing embodiments. The method includes:
providing a raw material containing the element Si, the element O, the element K, the element Fe, and an alkaline earth metal element;
heating the raw material to form vapor by using a vapor deposition method, and then cooling the vapor to form a deposit; and
crushing the deposit to obtain a crushed product.

In some embodiments, the method for preparing the silicon-based negative electrode active material further includes:
coating the crushed product to obtain a product with a coating layer.

In some embodiments, in the operation of heating the raw material to form vapor, the heating is performed at a temperature of 1100°C to 1550°C.

In some embodiments, in the operation of cooling the vapor to form a deposit, the cooling is performed at a temperature of 700°C to 900°C.

According to a third aspect, this application provides a secondary battery including a negative electrode, where the negative electrode includes the silicon-based negative electrode active material according to any one of the foregoing embodiments.

According to a fourth aspect, this application provides an electric apparatus including the secondary battery according to any one of the foregoing embodiments.

### Beneficial effects

One or more embodiments of this application have one or more of the following beneficial effects.
(1) The element K and the element Fe have achieved an unexpected synergistic effect. Technical effects achieved by the combination of them are significantly better than simple addition of technical effects achieved by separated use of them.
(2) The silicon-based negative electrode active material has improved initial coulombic efficiency.
(3) The silicon-based negative electrode active material has improved kinetic performance.
(4) The silicon-based negative electrode active material has high energy density.

### BRIEF DESCRIPTION OF DRAWINGS

FIG. 1 is a schematic diagram of a secondary battery according to an embodiment of this application.
FIG. 2 is an exploded view of a secondary battery according to an embodiment of this application.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery according to an embodiment of this application as a power source.

Reference signs are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses embodiments of a silicon-based negative electrode active material, a preparation method thereof, a positive electrode plate, a negative electrode plate, a secondary battery, a battery module, a battery pack, and an apparatus in this application with appropriate reference to detailed descriptions of accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limit values. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this specification, ppm (parts per million) refers to parts per million. However, when used to describe the content of the element K or the element Fe, ppm refers to parts per million of a mass of the element K or the element Fe in the silicon-based negative electrode active material in a mass of the silicon-based negative electrode active material.

### [Secondary battery]

A secondary battery, also referred to as a rechargeable battery or a storage battery, is a battery that can be charged after being discharged to activate active materials for continuous use.

Generally, a secondary battery includes a positive electrode plate, a negative electrode plate, a separator, and an electrolyte. During charging and discharging of the battery, active ions (for example, sodium ions) are intercalated and deintercalated between the positive electrode plate and the negative electrode plate. The separator is disposed between the positive electrode plate and the negative electrode plate to mainly prevent short circuit between positive and negative electrodes and to allow the active ions to pass through. The electrolyte is between the positive electrode plate and the negative electrode plate to mainly conduct the active ions.

The secondary battery is, for example, a lithium-ion battery. Composition of the lithium-ion battery mainly includes a positive electrode, a negative electrode, a separator, and an electrolyte. The positive and negative electrodes are separated by the separator to prevent short circuit, and the electrolyte infiltrates the positive and negative electrodes to ensure ion conduction. During charging, Li⁺ is deintercalated from the positive electrode and intercalated into the negative electrode through the separator via the electrolyte, such that the positive electrode is in a sodium-poor state at a high potential and the negative electrode is in a sodium-rich state at a low potential. During discharging, the process is reversed. Li⁺ is deintercalated from the negative electrode and intercalated into the positive electrode material through the separator via the electrolyte, such that the positive electrode is restored to the sodium-rich state. To maintain charge balance, a same amount of electrons are transferred through an external circuit during charging and discharging, and migrate between the positive and negative electrodes together with Li⁺, such that oxidation and reduction reactions take place at the positive and negative electrodes, respectively. The lithium ions can reversibly migrate between the positive electrode and the negative electrode in the electrolyte, and both the positive electrode and the negative electrode are made of an insert-type material that allows reversible intercalation and deintercalation of the lithium ions.

The secondary battery is, for example, a sodium-ion battery. Composition of the sodium-ion battery mainly includes a positive electrode, a negative electrode, a separator, and an electrolyte. The positive and negative electrodes are separated by the separator to prevent short circuit, and the electrolyte infiltrates the positive and negative electrodes to ensure ion conduction. During charging, Na⁺ is deintercalated from the positive electrode and intercalated into the negative electrode through the separator via the electrolyte, such that the positive electrode is in a sodium-poor state at a high potential and the negative electrode is in a sodium-rich state at a low potential. During discharging, the process is reversed. Na⁺ is deintercalated from the negative electrode and intercalated into the positive electrode material through the separator via the electrolyte, such that the positive electrode is restored to the sodium-rich state. To maintain charge balance, a same amount of electrons are transferred through an external circuit during charging and discharging, and migrate between the positive and negative electrodes together with Na⁺, such that oxidation and reduction reactions take place at the positive and negative electrodes, respectively. The sodium ions can reversibly migrate between the positive electrode and the negative electrode in the electrolyte, and both the positive electrode and the negative electrode are made of an insert-type material that allows reversible intercalation and deintercalation of the sodium ions.

### [Negative electrode plate]

A negative electrode plate includes a negative electrode current collector and a negative electrode film layer disposed on at least one surface of the negative electrode current collector, and the negative electrode film layer includes a negative electrode active material.

The negative electrode active material of this application is as follows. The silicon-based negative electrode active material includes a silicate phase containing an alkaline earth metal element, and the silicon-based negative electrode active material contains both the element K and the element Fe.

In this solution, the silicon-based negative electrode active material contains a combination of the element K and the element Fe. Such specific combination improves the initial coulombic efficiency and cycling capacity retention rate of the silicon-based negative electrode active material. The combination of the element K and the element Fe has achieved an unexpected synergistic effect. Technical effects achieved by the combination of them are significantly better than simple addition of technical effects achieved by separated use of them. This application is not limited by the following theory. Potassium silicate generated by reaction of the element K and silicon dioxide helps to reduce consumption of lithium during initial charging and discharging and improve the capacity utilization of the negative electrode active material, thereby improving the initial coulombic efficiency of the secondary battery. In addition, the element Fe improves conduction performance of active ions and electrons during intercalation/deintercalation of active ions (lithium ions) of the negative electrode active material and reduces impedance of the negative electrode during cycling, thereby effectively improving the rate performance of the battery. Coupling of the element Fe and the element K can alleviate internal swelling of the material to some extent while increasing ionic conductivity. Therefore, using the negative electrode active material of this application allows a secondary battery to achieve both high initial coulombic efficiency and good rate performance while having high energy density.

In some embodiments, the silicon-based negative electrode active material includes a silicon-based negative electrode active material. Silicon in the silicon-based negative electrode active material may be present in the form of various silicon phases such as crystal silicon. Specifically, the silicon phases can be uniformly distributed and embedded/buried into a matrix of the silicon-based negative electrode active material. In other words, the silicon phases can be dispersed and uniformly distributed in the matrix. The silicon phase is a group formed by assembling one or more silicon crystals. There may be one, two, or more groups.

In some embodiments, the element K and the element Fe grow in the silicon-based negative electrode active material, for example, grow therein during vapor deposition of the silicon-based negative electrode active material. In some embodiments, the element K and the element Fe grow in the silicon-based negative electrode active material during vapor deposition with the silicon-based negative electrode active material.

In some embodiments, the silicon-based negative electrode active material has one or more composite structures in which nanocrystals are dispersed in a silicon-oxygen material matrix. The silicon-based negative electrode active material has, for example, a structure in which Si crystal grains and silicate crystal grains are dispersed in the silicon-oxygen material matrix.

In some embodiments, a content of the element K is greater than a content of the element Fe. Within this proportional range, the element K and the element Fe play an unexpected synergistic effect and significantly improve the initial coulombic efficiency and kinetic performance of the silicon-based negative electrode active material.

In some embodiments, in the silicon-based negative electrode material, a mass ratio of K to Fe is greater than or equal to 8:1. Within this ratio range, the element K and the element Fe play an unexpected synergistic effect, further significantly improving the initial coulombic efficiency and kinetic performance of the negative electrode active material.

In some embodiments, in the silicon-based negative electrode material, the mass ratio of K to Fe is 10:1 to 36:1. Within this ratio range, the element K and the element Fe play an unexpected synergistic effect, further significantly improving the initial coulombic efficiency and kinetic performance of the negative electrode active material.

In some embodiments, in the silicon-based negative electrode material, the mass ratio of K to Fe is 20:1 to 32:1. Within this ratio range, the element K and the element Fe play an unexpected synergistic effect, further significantly improving the initial coulombic efficiency and kinetic performance of the negative electrode active material.

In some embodiments, the mass ratio of the element K to the element Fe in the silicon-based negative electrode material may be 60:1 or below, optionally 50:1 or below, optionally 40:1 or below, optionally 30:1 or below, optionally 25:1 or below, optionally 20:1 or below, or 15:1 or below. In some embodiments, the mass ratio of the element K to the element Fe in the silicon-based negative electrode material may be greater than or equal to 8:1, optionally 10:1 or above, optionally 12:1 or above, optionally 13:1 or above, optionally 16:1 or above, or optionally 18:1 or above. The mass ratio of the element K to the element Fe may be formed by any of these upper limit values and any of these lower limit values. Within these ratio ranges, the element K and the element Fe play an unexpected synergistic effect, further significantly improving the initial coulombic efficiency and kinetic performance of the negative electrode active material.

In some embodiments, the mass ratio of the element K to the element Fe in the silicon-based negative electrode material is optionally (21-26):1, optionally (21-27):1, optionally (20-27):1, optionally (20-32):1, optionally (13-32):1, optionally (13-34):1, optionally (13-54):1, optionally (16-54):1, optionally (16-30):1, or optionally (18-25):1.

In some embodiments, the content of the element K in the silicon-based negative electrode material is 400 ppm or above. Within this content range, the element K and the element Fe play an unexpected synergistic effect, significantly improving the initial coulombic efficiency and kinetic performance of the negative electrode active material.

In some embodiments, the content of the element K in the silicon-based negative electrode material is 800 ppm to 2000 ppm. In view of this, the negative electrode active material has further improved initial cycling efficiency and kinetic performance. Within this content range, the element K and the element Fe play an unexpected synergistic effect, significantly improving the initial coulombic efficiency and kinetic performance of the negative electrode active material.

In some embodiments, the content of the element K in the silicon-based negative electrode material is 800 ppm to 1800 ppm. In view of this, the negative electrode active material has further improved initial cycling efficiency and kinetic performance. Within this content range, the element K and the element Fe play an unexpected synergistic effect, significantly improving the initial coulombic efficiency and kinetic performance of the negative electrode active material.

In some embodiments, the content of the element K in the silicon-based negative electrode material is 1200 ppm to 1600 ppm. In view of this, the negative electrode active material has further improved initial cycling efficiency and kinetic performance. Within this content range, the element K and the element Fe play an unexpected synergistic effect, significantly improving the initial coulombic efficiency and kinetic performance of the negative electrode active material.

In some embodiments, an upper limit value of the content of the element K may be any value selected from 2000 ppm, 1800 ppm, 1600 ppm, 1500 ppm, 1400 ppm, 1300 ppm, 1200 ppm, and 1000 ppm; and a lower limit value of the content of the element K may be any value selected from 400 ppm, 500 ppm, 600 ppm, 700 ppm, 800 ppm, 900 ppm, 1000 ppm, and 1200 ppm. To be specific, a content range of the element K may be defined by any of these upper limit values and any of these lower limit values. Within these content ranges, the element K and the element Fe play an unexpected synergistic effect, significantly improving the initial coulombic efficiency and kinetic performance of the negative electrode active material.

In some embodiments, the content of the element K in the silicon-based negative electrode material is optionally 400 ppm to 1600 ppm, optionally 800 ppm to 1600 ppm, optionally 1300 ppm to 1600 ppm, optionally 700 ppm to 1400 ppm, optionally 800 ppm to 1500 ppm, optionally 900 ppm to 1600 ppm, or optionally 1000 ppm to 1500 ppm.

In some embodiments, the content of the element Fe in the silicon-based negative electrode material is 500 ppm or below. In view of this, the negative electrode active material has further improved initial cycling efficiency and kinetic performance.

In some embodiments, the content of the element Fe in the silicon-based negative electrode material is 30 ppm to 500 ppm. In view of this, the negative electrode active material has further improved initial cycling efficiency and kinetic performance.

In some embodiments, the content of the element Fe in the silicon-based negative electrode material is 30 ppm to 400 ppm. In view of this, the negative electrode active material has further improved initial cycling efficiency and kinetic performance.

In some embodiments, an upper limit value of the content of the element Fe in the silicon-based negative electrode material may be any value selected from 500 ppm, 400 ppm, 300 ppm, 260 ppm, 200 ppm, 170 ppm, 150 ppm, 130 ppm, 100 ppm, 80 ppm, and 60 ppm; and a lower limit value of the content of the element Fe may be any value selected from 15 ppm, 20 ppm, 25 ppm, 30 ppm, 35 ppm, 40 ppm, 45 ppm, 50 ppm, 60 ppm, 70 ppm, 80 ppm, 90 ppm, and 100 ppm. To be specific, a content range of the element Fe may be defined by any of these upper limit values and any of these lower limit values. Within these content ranges, the element K and the element Fe play an unexpected synergistic effect, significantly improving the initial coulombic efficiency and kinetic performance of the negative electrode active material.

In some embodiments, the content of the element Fe in the silicon-based negative electrode material is optionally 15 ppm to 500 ppm, 15 ppm to 300 ppm, 15 ppm to 150 ppm, 15 ppm to 80 ppm, 15 ppm to 60 ppm, 20 ppm to 260 ppm, 20 ppm to 150 ppm, 20 ppm to 100 ppm, 20 ppm to 80 ppm, 20 ppm to 60 ppm, 30 ppm to 200 ppm, 30 ppm to 100 ppm, 35 ppm to 400 ppm, 35 ppm to 300 ppm, 35 ppm to 200 ppm, 35 ppm to 100 ppm, 35 ppm to 80 ppm, 35 ppm to 60 ppm, 40 ppm to 170 ppm, 40 ppm to 130 ppm, 40 ppm to 100 ppm, 40 ppm to 80 ppm, 45 ppm to 100 ppm, 60 ppm to 300 ppm, 60 ppm to 150 ppm, 80 ppm to 500 ppm, 90 ppm to 300 ppm, or 100 ppm to 260 ppm.

In some embodiments, a median particle size by volume Dᵥ50 of the silicon-based negative electrode active material is 4 µm to 10 µm, optionally 5 µm to 8 µm. In this solution, the silicon-based negative electrode active material has improved initial coulombic efficiency and kinetic performance.

In some embodiments, the median particle size by volume Dᵥ50 of the silicon-based negative electrode active material is optionally 4 µm or above, more optionally 5 µm or above, which can reduce consumption of active ions for film formation at the negative electrode and reduce side reactions of the electrolyte at the negative electrode, thereby reducing the initial coulombic efficiency of the secondary battery and improving the cycling performance of the secondary battery, and also can reduce the amount of a binder added to the negative electrode plate, helping to increase the energy density of the secondary battery. The median particle size Dᵥ50 is optionally 10 µm or below, more optionally 8 µm or below. This allows for a short migration path for active ions and electrons in material particles, improving a migration speed of ions and electrons, thereby improving the kinetic performance of the secondary battery. This also helps to prevent fracture of the silicon-based negative electrode active material during charging and discharging, thereby improving the cycling performance of the secondary battery.

In some embodiments, a specific surface area of the silicon-based negative electrode active material is 6 m²/g or below, optionally 3 m²/g to 5 m²/g. In this solution, the silicon-based negative electrode active material has improved initial coulombic efficiency and cycling capacity retention rate.

In some embodiments, the specific surface area of the silicon-based negative electrode active material is 3 m²/g to 6 m²/g. The specific surface area being optionally 3 m²/g or above allows for more active sites on the surface of the material particles, thereby effectively improving the electrochemical performance of the silicon-based negative electrode active material and meeting the requirements on the kinetic performance of the secondary battery. The specific surface area being optionally 6 m²/g or below helps to reduce the side reactions of the electrolyte at the negative electrode and also can reduce the consumption of active ions for film formation at the negative electrode, thereby reducing the initial coulombic efficiency of the secondary battery and improving the cycling performance of the secondary battery.

In some embodiments, a powder volume resistivity of the silicon-based negative electrode active material under a pressure of 4 MPa is 6 Ω·cm or below, optionally 0.5 Ω·cm to 4.5 Ω·cm. In this solution, the silicon-based negative electrode active material has improved initial coulombic efficiency and kinetic performance.

In some embodiments, the powder volume resistivity of the silicon-based negative electrode active material under the pressure of 4 MPa is 6 Ω·cm or below, more optionally 4.5 Ω·cm or below. The powder volume resistivity of the silicon-based negative electrode active material being within the above range can reduce the obstruction to migration of electrons in the particles, help to improve the kinetic performance of the silicon-based negative electrode active material, and also help to reduce polarization phenomena of the negative electrode, thereby prolonging the cycle life of the secondary battery. The silicon-based negative electrode active material may be subjected to a surface treatment to reduce the powder volume resistivity.

In some embodiments, a compacted density of the silicon-based negative electrode active material under a pressure of 49000 N is 1.4 g/cm³ to 1.8 g/cm³, optionally 1.5 g/cm³ to 1.7 g/cm³. In this solution, the silicon-based negative electrode active material has improved energy density.

In some embodiments, the silicate phase containing an alkaline earth metal element includes a magnesium-containing silicate phase, and a half-peak width of the magnesium-containing silicate phase is less than or equal to 0.50°. In this solution, the silicon-based negative electrode active material has improved initial coulombic efficiency and kinetic performance.

In some embodiments, the silicate phase containing an alkaline earth metal element includes a magnesium-containing silicate phase, and a grain size of the magnesium-containing silicate phase is less than or equal to 21 nm. In this solution, the silicon-based negative electrode active material has improved initial coulombic efficiency and kinetic performance.

In some embodiments, an XRD spectrum of the silicon-based negative electrode active material has a first diffraction peak at a diffraction angle 20 of 26° to 30°, with a half-peak width of the first diffraction peak being 0.8° to 3.2°, has a second diffraction peak at a diffraction angle 2θ of 46° to 50°, with a half-peak width of the second diffraction peak being 1.0° to 4.2°, and has a third diffraction peak at a diffraction angle 2θ of 54° to 58°, with a half-peak width of the third diffraction peak being 0.8° to 4.5°. In this solution, the negative electrode active material has these three diffraction peaks, and the half-peak widths are within these ranges, indicating that the negative electrode active material has a good microcrystal size and appropriate crystallinity, such that the negative electrode active material has high capacity performance and initial coulombic efficiency, and the negative electrode active material maintains high structural stability during charge-discharge cycling and is not prone to fracture, thereby prolonging the cycle life of the battery.

In some embodiments, the silicon-based negative electrode material contains the element Si and the element O, where a molar ratio of the element O to the element Si is greater than 0 and less than 2, optionally (0.2-1.8):1, optionally (0.3-1.7):1, optionally (0.4-1.6):1, optionally (0.6-1.5):1, optionally (0.7-1.4):1, optionally (0.8-1.3):1, optionally (0.9-1.2):1, or optionally (1.0-1.1):1.

In some embodiments, the alkaline earth metal element includes one or more of the element Mg, the element Be, the element Ca, and the element Ba. In these embodiments, the silicon-based negative electrode active materials all exhibit improved initial cycling efficiency and kinetic performance.

In some embodiments, the alkaline earth metal element includes the element Mg. In these embodiments, the silicon-based negative electrode active materials all exhibit improved initial cycling efficiency and kinetic performance.

In some embodiments, at least part of a surface of the silicon-based negative electrode active material is provided with a coating layer.

In some embodiments, at least part of the surface of the silicon-based negative electrode active material is coated with a coating layer.

In some embodiments, the coating layer is made of a material including one or more of a polymer, a carbon material, a metal material, and a metal compound. For example, the coating layer includes one or more of a polymer coating layer, a carbon coating layer, and a metal compound coating layer. Optionally, the polymer may be one or more selected from polyaniline, polyacetylene, polystyrene, polyacrylonitrile, polyvinyl chloride, and polyethylene. Optionally, the carbon material may include one or more of graphite, mesocarbon microbeads (MCMB), pyrolytic carbon of hydrocarbon compounds, hard carbon, and soft carbon, where the graphite may be one or more of natural graphite and artificial graphite. Optionally, the metal compound may include one or more of Ti₅Si₃, Al₂O₃, and TiO₂. The coating layer can further alleviate a volume expansion effect of the silicon-based negative electrode active material, thereby prolonging the cycle life of the material. In addition, the coating layer also protects the silicon-based negative electrode active material, suppresses side reactions of the electrolyte on the surface of the material, and prevents the surface of the material from being eroded by the electrolyte, making the silicon-based negative electrode active material have high capacity utilization, thereby further prolonging the cycle life of the battery.

According to a second aspect, this application provides a method for preparing the silicon-based negative electrode active material according to any one of the foregoing embodiments. The method includes:
providing a raw material containing the element Si, the element O, the element K, the element Fe, and an alkaline earth metal element;
heating the raw material to form vapor by using a vapor deposition method, and then cooling the vapor to form a deposit; and
crushing the deposit to obtain a crushed product.

In some embodiments, the method for preparing the silicon-based negative electrode active material further includes:
coating the crushed product to obtain a product with a coating layer.

In some embodiments, the element Si in the raw material may come from elemental silicon and silicon oxide, and the element O in the raw material may come from silicon oxide. The elemental silicon includes, for example, metal silicon. The silicon oxide includes, for example, one or more of silicon monoxide (SiO) and silicon dioxide (SiO₂). The metal silicon is, for example, any metal silicon or industrial silicon specified in the standard GB/T 2881-2014. The purity of the elemental silicon is, for example, 3 N or above, 4 N or above, 5 N or above, or 6 N or above.

In some embodiments, the element K in the raw material may come from the element K contained in the elemental silicon or silicon oxide, or come from a potassium source added to the raw material.

In some embodiments, the element Fe in the raw material may come from the element Fe contained in the elemental silicon or silicon oxide, or come from an iron source added to the raw material.

In some embodiments, the alkaline earth metal element in the raw material may come from an alkaline earth metal element contained in the elemental silicon or silicon oxide, or come from an alkaline earth metal source added to the raw material.

In some embodiments, the potassium source may be one or more selected from potassium oxide, potassium hydroxide, potassium chloride, and potassium silicate.

In some embodiments, the iron source may be one or more selected from metal iron, iron alloy, and iron compound, where the iron compound may be one or more selected from iron oxide, iron sulfide, iron carbonate, iron hydroxide, iron acetate, iron oxalate, iron nitrate, and iron sulfate.

In some embodiments, the alkaline earth metal source may be one or more selected from elemental alkaline earth metal, alkaline earth metal alloy, and alkaline earth metal compound, where the alkaline earth metal compound may be one or more selected from alkaline earth metal oxide, alkaline earth metal sulfide, alkaline earth metal carbonate, alkaline earth metal hydroxide, alkaline earth metal acetate, alkaline earth metal oxalate, alkaline earth metal nitrate, and alkaline earth metal sulfate.

In some embodiments, the raw material containing the element Si, the element O, the element K, the element Fe, and an alkaline earth metal element includes elemental silicon, silicon dioxide, potassium source, iron source, and alkaline earth metal source.

In some embodiments, the content of the element K in a silicon oxide-based compound is adjusted by adjusting the type and addition amount of the potassium source in the raw material.

In some embodiments, the content of the element Fe in the silicon oxide-based compound is adjusted by using one or more methods of mixing various types of silicon oxide powder or metal silicon powder having various contents of Fe and adjusting the type and addition amount of the iron source.

In some embodiments, the operation of heating the raw material to form vapor is performed in an inert atmosphere at a normal pressure or a reduced pressure.

In some embodiments, the operation of cooling the vapor to form a deposit is performed in an inert atmosphere at a normal pressure or a reduced pressure.

In the foregoing preparation method, the inert atmosphere may be a nitrogen atmosphere, an argon atmosphere, a helium atmosphere, or the like. Optionally, an absolute pressure of the inert atmosphere is a normal pressure (1 standard atmospheric pressure) or a reduced pressure (less than 1 standard atmospheric pressure). Optionally, the absolute pressure of the inert atmosphere is 10 Pa to 950 Pa, more optionally 20 Pa to 100 Pa.

In some embodiments, within a pressure range of the inert atmosphere, reducing the pressure (that is, increasing the vacuum degree) can correspondingly increase the content of the element K and the content of the element Fe in a silicon-based negative electrode active material that is ultimately obtained.

In some embodiments, in the operation of heating the raw material to form vapor, the heating is performed at a temperature of 1100°C to 1550°C.

In some embodiments, in the operation of cooling the vapor to form a deposit, the cooling is performed at a temperature of 700°C to 900°C.

In some embodiments, in the operation of cooling the vapor to form a deposit, the temperature for cooling can be adjusted to allow the deposit to obtain an appropriate crystal structure. Optionally, the temperature for cooling is 850°C to 1050°C, which helps the silicon-based negative electrode active material to obtain a good microcrystal size and appropriate crystallinity, thereby making the silicon-based negative electrode active material have high initial coulombic efficiency and cycling performance. The temperature for cooling being lower than 800°C may result in excessively low crystallinity of the material, affecting the initial coulombic efficiency of the material; and the temperature for cooling being higher than 1050°C may result in an excessively large microcrystal size of the material, affecting the cycling performance of the material.

In some embodiments, within the above heating temperature range, raising the temperature can correspondingly increase the content of the element K and the content of the element Fe in the silicon-based negative electrode active material that is ultimately obtained.

In some embodiments, within the above pressure range of the inert atmosphere, reducing the pressure, that is, increasing the vacuum degree, can correspondingly increase the content of the element K and the content of the element Fe in the silicon-based negative electrode active material that is ultimately obtained.

In some embodiments, the operation of crushing the deposit includes: according to preset median particle size by volume (Dᵥ50) and specific surface area parameters of the product, performing operations of coarse crushing-fine crushing-classification on the deposit to obtain a product meeting the preset parameters. In some embodiments, any method and equipment known in the art may be used for crushing and classifying the deposit, for example, a grinding machine, or an air jet crushing-classification integrated machine.

In some embodiments, the method for preparing the silicon-based negative electrode active material further includes an operation of coating the crushed product to obtain a product with a coating layer.

In some embodiments, the coating layer is made of a material including one or more of a polymer, a carbon material, a metal material, and a metal compound. For example, the coating layer includes one or more of a polymer coating layer, a carbon coating layer, and a metal compound coating layer. Optionally, the polymer may be one or more selected from polyaniline, polyacetylene, polystyrene, polyacrylonitrile, polyvinyl chloride, and polyethylene. Optionally, the carbon material may include one or more of graphite, mesocarbon microbeads (MCMB), pyrolytic carbon of hydrocarbon compounds, hard carbon, and soft carbon, where the graphite may be one or more of natural graphite and artificial graphite. Optionally, the metal compound may include one or more of Ti₅Si₃, Al₂O₃, and TiO₂. The coating layer can further alleviate a volume expansion effect of the silicon-based negative electrode active material, thereby prolonging the cycle life of the material. In addition, the coating layer also protects the silicon-based negative electrode active material, suppresses side reactions of the electrolyte on the surface of the material, and prevents the surface of the material from being eroded by the electrolyte, making the silicon-based negative electrode active material have high capacity utilization, thereby further prolonging the cycle life of the battery.

In some embodiments, the surface of the silicon-based negative electrode active material is coated using a liquid phase coating method to form a coating layer. For example, a polymer is dissolved in a specified solvent and fully stirred with silicon-based negative electrode active material particles; the resulting mixture is mixed evenly; and then evaporation is performed to remove the solvent, to make sure that the surface of the silicon-based negative electrode active material particles is uniformly coated with the polymer.

In some embodiments, the surface of the silicon-based negative electrode active material is coated using a chemical vapor deposition method to form a coating layer. For example, a hydrocarbon compound gas is introduced into a reaction furnace containing the silicon-based negative electrode active material, and heat treatment is performed in an inert atmosphere to carbonize the hydrocarbon compound to form a coating layer that is applied on the surface of the silicon-based negative electrode active material, thereby obtaining a silicon-based negative electrode active material coated with the coating layer on surface.

In some embodiments, the coating treatment includes carbon coating treatment. Optionally, the carbon coating treatment includes the following operations: placing the crushed product in a chamber containing a carbon source gas, heating the crushed product to 700°C to 1000°C, and maintaining the temperature for 1 h to 6 h.

In some embodiments, the coating treatment includes carbon coating treatment. Optionally, the carbon coating treatment includes the following operations: placing the crushed product in a chamber containing a carbon source gas, heating the crushed product to 800°C to 900°C, and maintaining the temperature for 2 h to 5 h.

In some embodiments, the alkaline earth metal source may be one or more of elemental alkaline earth metal, alkaline earth metal hydroxide, alkaline earth metal carbonate, alkaline earth metal nitrate, aminated alkaline earth metal, and hydrogenated alkaline earth metal.

In some embodiments, the alkaline earth metal source may be one or more of metal magnesium, magnesium hydroxide, magnesium carbonate, magnesium nitrate, magnesium amide, and magnesium hydride.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, in addition to the silicon-based negative electrode active material in this application, the negative electrode film layer may further include a silicon based negative electrode active material known in the art, and persons skilled in the art can select according to actual needs. As an example, the silicon-based negative electrode active material may include but is not limited to one or more of artificial graphite, natural graphite, hard carbon, soft carbon, another silicon-based material, and a tin-based material. The another silicon-based material may include one or more of elemental silicon, a silicon-oxygen compound different from this application, a silicon-carbon compound, a silicon-nitrogen compound, and silicon alloy. The tin-based material may include one or more of elemental tin, a tin-oxygen compound, and tin alloy. These materials are all commercially available.

In some embodiments, the negative electrode film layer further optionally includes a binder. For example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be at least one selected from superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the foregoing constituents used for preparing the negative electrode plate, for example, the silicon-based negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Positive electrode plate]

In some embodiments, the positive electrode plate typically includes a positive electrode current collector and a positive electrode film layer disposed on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Positive electrode active material]

In some embodiments, the positive electrode active material may be a well-known positive electrode active material for secondary batteries in the art.

For example, the positive electrode active material may include at least one of the following materials: olivine-structured lithium-containing phosphate, lithium transition metal oxide, and respective modified compounds thereof. However, this application is not limited to these materials, and may alternatively use other conventional materials that can be used as positive electrode active materials for batteries. One of these positive electrode active materials may be used alone, or two or more of them may be used in combination. An example of the lithium transition metal oxide may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. An example of the olivine-structured lithium-containing phosphate may include but is not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

### [Electrolyte]

An electrolyte conducts ions between the positive electrode plate and the negative electrode plate. The electrolyte is not specifically limited to any specific type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolytic salt is selected from sodium perchlorate, sodium hexafluorophosphate, sodium tetrafluoroborate, and sodium hexafluoroarsenate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving overcharge performance of the battery and an additive for improving high-temperature performance or low-temperature performance of the battery.

### [Separator]

In some embodiments, the secondary battery further includes a separator. The separator is not limited to any particular type in this application and may be any well-known porous separator with good chemical stability and mechanical stability.

In some embodiments, the separator may be made of at least one selected from glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The soft pack may be made of plastic. As the plastic, polypropylene, polybutylene terephthalate, polybutylene succinate, and the like may be listed.

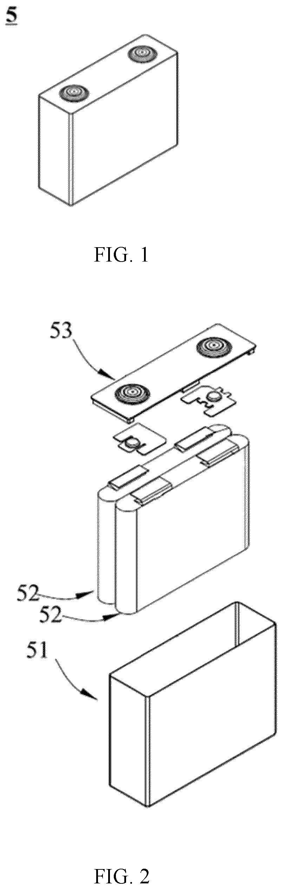

The secondary battery is not limited to any particular shape in this application and may be cylindrical, rectangular, or of any other shape. For example, FIG. 1 is a schematic diagram of a secondary battery according to an embodiment of this application; and FIG. 2 is an exploded view of a secondary battery according to an embodiment of this application.

In some embodiments, referring to FIG. 2, the outer package of the secondary battery may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. An electrolyte infiltrates the electrode assembly 52. The secondary battery 5 may include one or more electrode assemblies 52, and persons skilled in the art may make choices according to actual needs.

In some embodiments, the secondary battery may be assembled into a battery module, and the battery module may include one or more secondary batteries. The specific quantity may be chosen by persons skilled in the art according to use and capacity of the battery module.

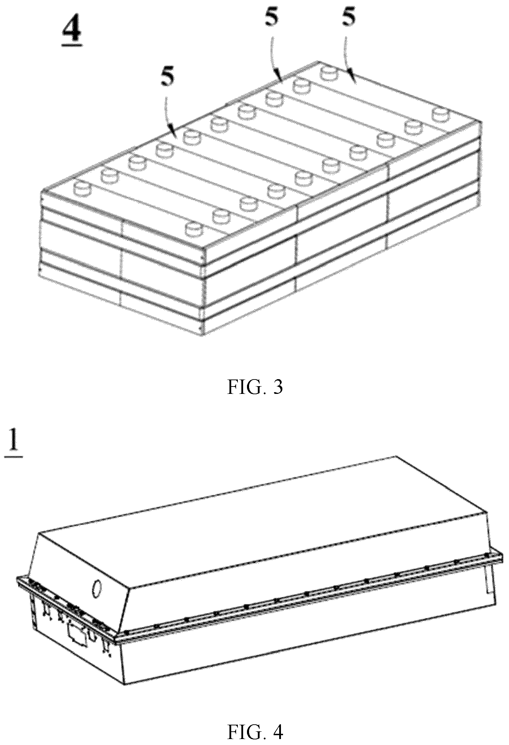

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. A specific quantity may be chosen by persons skilled in the art based on use and capacity of the battery pack.

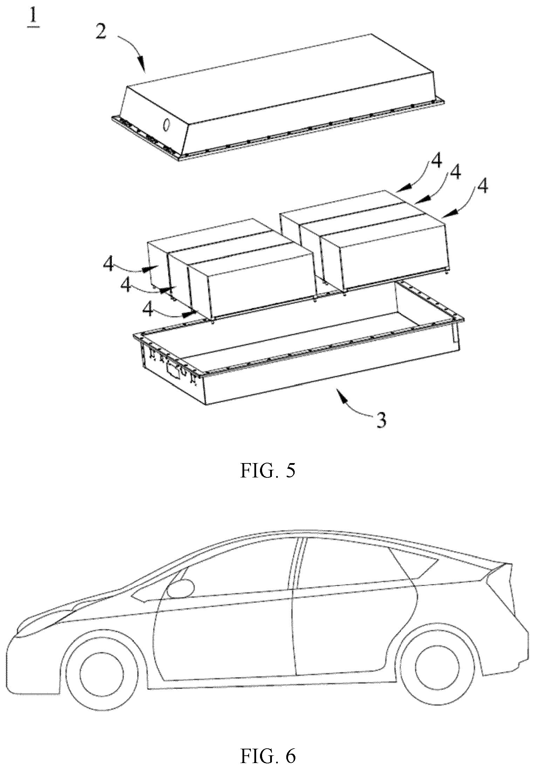

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Silicon-based negative electrode active material

### 1. Method for preparing silicon-based negative electrode active material

### 1.1 Overview

In the following specific examples, the method for preparing silicon-based negative electrode active material is summarized as follows.
(1) Vapor containing the element Si, the element O, the element K, the element Fe, and the element Mg was provided, and the vapor was cooled to obtain a deposit.
(2) The deposit was crushed to obtain a crushed product.
(3) The crushed product was coated with carbon to obtain a carbon-coated product.

### 1.2 Detailed description

In the following specific examples, the method for preparing silicon-based negative electrode active material is described in detail as follows.
(1) A raw material composition was provided according to contents of the element K, the element Fe, and the element Mg in a target product, where the raw material composition included elemental silicon, silicon oxide, a potassium source (potassium carbonate), an iron source (iron nitrate), and an alkaline earth metal source (metal magnesium).
(2) In a helium atmosphere with an absolute pressure of 30 Pa, the raw material composition was heated to 1300°C to form vapor by using a vapor deposition method, and then the vapor was cooled to 900°C to form a deposit.
(3) The deposit was collected and crushed into powder.
(4) The powder was put into a reaction chamber of a vapor deposition device; a gas mixture of a carbon source gas (acetylene) and nitrogen was introduced into the reaction chamber, where acetylene accounted for 20% by volume; the gas mixture was heated to 750°C and maintained at the temperature for 2 h to obtain a carbon-coated product; and the product was collected as a negative electrode active material.

In the above preparation method, according to the composition of the target product, negative electrode active materials with various contents of Fe and K can be obtained by adaptively adjusting the contents of the alkaline earth metal source, the potassium source, and the iron source in the raw material mixture. It should be understood that due to the influence of the purity of elemental silicon and silicon dioxide, some elemental silicon and silicon dioxide contain specified amounts of element K and element Fe in advance, and in this case, the contents of the potassium source and the iron source in the raw material mixture should be adaptively adjusted according to the composition of the target product of the sample.

In the above preparation method, according to the composition of the target product, various silicon-based negative electrode active materials with different contents of the element K and the element Fe can be obtained by adaptively adjusting the contents of the alkaline earth metal source, the potassium source, and the iron source in the raw material mixture. It should be understood that due to the influence of the purity of elemental silicon and silicon dioxide, some elemental silicon and silicon dioxide contain specified amounts of element K and element Fe in advance, and in this case, the contents of the potassium source and the iron source in the raw material mixture should be adaptively adjusted according to the composition of the target product of the sample.

Various silicon-based negative electrode active material samples (referred to as samples hereinafter) were prepared according to the above method, and these samples had different contents of K and Fe. These samples have the following properties.
(1) The negative electrode active material is a silicon-based negative electrode active material with a carbon coating layer, where a content percentage of the carbon coating layer is 4.2%±0.2%.
(2) A molar ratio of the silicon element to the oxygen element in the silicon-based negative electrode active material is 1±0.1.
(3) Based on 100% of the silicon-based negative electrode active material, a content of the element Mg accounts for 7.5%±0.5%.
(4) Based on 100% of the silicon-based negative electrode active material, a content of the element K is as shown in Table 1.
(5) Based on 100% of the silicon-based negative electrode active material, a content of the element Fe is as shown in Table 1.
(6) A median particle size by volume Dᵥ50 of the negative electrode active material is 6.5±0.5 µm.
(7) A specific surface area of the negative electrode active material is 5±0.2 m²/g.
(8) A powder volume resistivity of the negative electrode active material under a pressure of 4 MPa is 4±0.1 Ω·cm.
(9) A compacted density of the silicon-based negative electrode active material under a pressure of 49000 N is 1.6±0.1 g/cm³.

### [Preparation of button battery]

(1) Preparation of negative electrode plate: The foregoing prepared silicon-based negative electrode active material, a conductive agent Super-P (conductive carbon black), and a binder styrene-butadiene rubber were fully stirred and mixed at a mass ratio of 85:5:10 in an appropriate amount of deionized water to form a uniform negative electrode slurry; and the negative electrode slurry was applied onto a surface of a negative electrode current collector copper foil, followed by drying and cold pressing to obtain a negative electrode plate.
(2) Counter electrode: Metal lithium sheet.
(3) Separator: polyethylene (PE) film.
(4) Preparation of electrolyte: Ethylene carbonate (EC), ethyl methyl carbonate (EMC), and diethyl carbonate (DEC) were mixed at a volume ratio of 1:1:1, then LiPF₆ was uniformly dissolved in this solution to obtain an electrolyte, and fluoroethylene carbonate (FEC) was added to the electrolyte, where a concentration of the LiPF₆ was 1 mol/L, and a mass percentage of the FEC in the electrolyte was 6%.
(5) Preparation of button battery: The foregoing negative electrode plate, separator, and metal lithium sheet counter electrode were stacked in sequence and then added with the foregoing electrolyte to obtain a button battery.

### [Preparation of full battery]

A mixture of the foregoing prepared silicon-based negative electrode active material and artificial graphite (at a mass ratio of 15%:85%), a conductive agent carbon black (Super P), carbon nanotubes (CNTs), a binder styrene-butadiene rubber, and a thickener sodium carboxymethyl cellulose were fully stirred and mixed at a weight ratio of 96.2%:0.7%:0.1%:1.8%:1.2% in an appropriate amount of a solvent deionized water to form a negative electrode slurry. The negative electrode slurry was applied onto two surfaces of a negative electrode current collector copper foil, followed by drying and cold pressing to obtain a negative electrode plate.

LiNi_{0.8}Co_{0.1}Mn_{0.1}O₂ (NCM811), a conductive agent Super P, and a binder polyvinylidene fluoride were mixed at a weight ratio of 96.5%:1.5%:2%, added with an appropriate amount of a solvent NMP, and well stirred to obtain a positive electrode slurry. The positive electrode slurry was applied onto two surfaces of a positive electrode current collector aluminum foil, followed by drying and cold pressing to obtain a positive electrode plate.

Ethylene carbonate (EC), ethyl methyl carbonate (EMC), and diethyl carbonate (DEC) were mixed at a volume ratio of 1:1:1, then LiPF₆ was uniformly dissolved in this solution to obtain an electrolyte, and fluoroethylene carbonate (FEC) was added to the electrolyte, where a concentration of the LiPF₆ was 1 mol/L, and a mass percentage of the FEC in the electrolyte was 6%.

A PE separator and the foregoing prepared positive electrode plate and negative electrode plate were arranged in sequence, with the separator being disposed between the positive electrode plate and the negative electrode plate for separation, and then the resulting stack was wound to obtain an electrode assembly; the electrode assembly was placed in an outer package and dried; and then the electrolyte was injected, followed by processes such as vacuum packaging, standing, formation, and aging to obtain a secondary battery.

### II. Analysis and test methods

### 2.1. Element analysis (for example, K, Fe, Si, and an alkaline earth metal element)

Element content has the meaning well known in the art and can be tested using methods known in the art. The silicon-based negative electrode active material can be digested with reference to EPA-3052-1996 Microwave Acid Digestion Method of Silicates and then the contents of target elements are measured using an ICAP-7000 inductively coupled plasma atomic emission spectrometer (ICP-OES) from Thermo Fisher Scientific (Thermo Fisher Scientific) in the United States in accordance with EPA 6010D-2014 Inductively Coupled Plasma-Atomic Emission Spectrometry. A specific test method was as follows: 10 mL nitric acid and 10 mL hydrofluoric acid were used for microwave digestion of 0.5 g of a silicon-based negative electrode active material sample; after the digestion, the sample was added to a 50 mL volumetric flask to reach a specified volume; and then the contents of the target elements were measured using the ICAP-7000 ICP-OES.

### 2.2. Element analysis (oxygen element and carbon element)

Element content has the meaning well known in the art and can be tested using methods known in the art. The content of the carbon element in the silicon-based negative electrode active material can be tested with reference to GB/T 20123-2006/ISO 15350:2000, and an HCS-140 infrared carbon-sulfur analyzer may be used as a test instrument.

The content of the oxygen element can be tested with reference to JY/T 017-1996 General Principles for Elemental Analyzer Methods, and a rapid OXY cube oxygen element analyzer from Elementar may be used as a test instrument.

### 2.3. Volume resistivity

The volume resistivity of the material has the meaning well known in the art and can be tested using instruments and methods well known in the art. For example, a four-probe method may be used to test a powder volume resistivity of the silicon-based negative electrode active material of this application under a pressure of 4 MPa. A test method included: Powder of the silicon-based negative electrode active material in this application was added onto a sample table, a pressure of 4 MPa was applied to the powder using a press machine, and after the pressure was stabilized, the powder volume resistivity of the silicon-based negative electrode active material under the pressure of 4 MPa was read through a resistivity meter.

### 2.4. Compacted density

The compacted density of the material has the meaning well known in the art and can be measured using instruments and methods well known in the art. For example, measurement can be performed with reference to the GB/T 24533-2009 standard using an electronic pressure testing machine such as a UTM7305 electronic pressure testing machine. About 1 g of the sample was accurately weighed and added to a mold with a bottom area of 1.327 cm²; a pressure of 49000 N was applied to the sample using a pressurizing apparatus; the pressure was maintained for 30 seconds and then released; and then a height of the sample was measured to obtain the compacted density of the material according to the formula ρ=m/(1.327×h). In the formula, ρ represents the compacted density of the material, m represents a mass of the sample, and h represents the height of the sample after the pressure of 49000 N was applied, maintained for 30 seconds and then released.

### 2.4. Powder particle size analysis

The Dᵥ10, Dᵥ50, and Dᵥ90 of the material have the meanings well known in the art, and can be tested using methods known in the art. For example, measurement can be performed using a laser particle size analyzer (for example, Malvern Master Size 3000) with reference to the standard GB/T 19077-2016.

Physical definitions of the Dᵥ10, Dᵥ50, and Dᵥ90 are as follows: particle sizes at which the cumulative volume distribution percentage of the silicon-based negative electrode active material reaches 10%, 50%, and 90%, respectively.

### 2.5. Specific surface area analysis

The specific surface area of the material has the meaning well known in the art, and can be measured using instruments and methods well known in the art. For example, the specific surface area is tested using a nitrogen-adsorption specific surface area analysis and test method and calculated using a BET (Brunauer Emmett Teller) method with reference to the GB/T 19587-2017 standard for measuring the specific surface area of solid substances by using a gas adsorption BET method, where the nitrogen-adsorption specific surface area analysis and test may be performed using a Tri StarII 3020 specific surface area and pore analyzer from Micromeritics in the United States.

### 2.6. Battery performance test

### (1) Initial coulombic efficiency

In an environment at 25°C and at normal pressure, the button battery was constant-current discharged to 0.005 V at 0.1C, then constant-current discharged to 0.005 V at 0.04C, and then left for standing for 5 min; a discharge capacity at that point was recorded as a lithium intercalation capacity of the first cycle; and subsequently, the button battery was constant-current charged to 1.5 V at 0.1C and then left standing for 5 min. This was one cyclic charge and discharge process, and a charge capacity at that point was recorded as a lithium deintercalation capacity of the first cycle. The button battery was subjected to the cyclic charge and discharge test 30 times according to the above method, and the lithium deintercalation capacity in each test was recorded. Initial coulombic efficiency (%)=lithium deintercalation capacity of first cycle/lithium intercalation capacity of first cycle×100%. Cycling capacity retention rate (%)=lithium deintercalation capacity of 30th cycle/lithium deintercalation capacity of first cycle×100%.

### (2) Direct-current internal resistance DCR of battery

At 25°C, the battery was constant-current charged to 4.25 V at 0.33C and then constant-current discharged at 1C for 48 minutes to adjust the battery to 20% SOC; a voltage of the battery at that point was recorded as U1; the battery was constant-current discharged at 3C for 30 seconds, with data collected at an interval of 0.1s; and a voltage at the end of the discharge was recorded as U2. A discharge DCR of the battery at 20% SOC was used to represent an initial DCR of the battery, where initial DCR of battery=(U1-U2)/3C.

**Table 1**

| | Raw material | | | | | Silicon-based negative electrode material | | | Battery performance | |
|---|---|---|---|---|---|---|---|---|---|---|
| | Elemental silicon (g) | SiO₂ (g) | K₂CO₃ (g) | Fe(NO₃)₃ (g) | Metal magnesium | Content of K (ppm) | Content of Fe (ppm) | K/Fe Content ratio | Initial coulombic efficiency IC (%) | Direct-current internal resistance DCR (mΩ) |
| E1 | 32.85 | 67.15 | 0.1527 | 0.0466 | 8 g | 800 | 100 | 8 | 71.42 | 512.00 |
| E2 | 32.85 | 67.15 | 0.1909 | 0.0466 | 8 g | 1,000 | 100 | 10 | 71.76 | 506.88 |
| E3 | 32.85 | 67.15 | 0.2290 | 0.0466 | 8 g | 1200 | 100 | 12 | 71.82 | 505.86 |
| E4 | 32.85 | 67.15 | 0.2290 | 0.0373 | 8 g | 1200 | 80 | 15 | 71.94 | 515.07 |
| E5 | 32.85 | 67.15 | 0.2443 | 0.0373 | 8 g | 1280 | 80 | 16 | 72.68 | 514.56 |
| E6 | 32.85 | 67.15 | 0.2481 | 0.0299 | 8 g | 1300 | 64 | 20 | 73.23 | 513.54 |
| E7 | 32.85 | 67.15 | 0.2687 | 0.0299 | 8 g | 1408 | 64 | 22 | 74.68 | 512.51 |
| E8 | 32.85 | 67.15 | 0.2310 | 0.0257 | 8 g | 1210 | 55 | 22 | 75.52 | 511.49 |
| E9 | 32.85 | 67.15 | 0.2520 | 0.0257 | 8 g | 1320 | 55 | 24 | 76.32 | 510.98 |
| E10 | 32.85 | 67.15 | 0.2290 | 0.0233 | 8 g | 1200 | 50 | 24 | 75.62 | 511.49 |
| E11 | 32.85 | 67.15 | 0.2577 | 0.0233 | 8 g | 1350 | 50 | 27 | 74.93 | 513.02 |
| E12 | 32.85 | 67.15 | 0.2863 | 0.0233 | 8 g | 1500 | 50 | 30 | 74.61 | 513.54 |
| E13 | 32.85 | 67.15 | 0.2749 | 0.0210 | 8 g | 1440 | 45 | 32 | 73.84 | 514.56 |
| E14 | 32.85 | 67.15 | 0.2749 | 0.0187 | 8 g | 1440 | 40 | 36 | 73.53 | 514.05 |
| E15 | 32.85 | 67.15 | 0.2405 | 0.0163 | 8 g | 1260 | 35 | 36 | 72.68 | 515.07 |
| E16 | 32.85 | 67.15 | 0.2901 | 0.0187 | 8 g | 1520 | 40 | 38 | 71.83 | 513.54 |
| D1 | 32.85 | 67.15 | 0 | 0 | 8 g | 0 | 0 | - | 65.32 | 583.68 |
| D2 | 32.85 | 67.15 | 0 | 0.003 | 8 g | 0 | 50 | 0 | 66.28 | 532.48 |
| D3 | 32.85 | 67.15 | 0.054 | 0 | 8 g | 800 | 0 | - | 69.63 | 568.32 |

### III. Results and discussion

Table 1 shows the composition and ingredients of the raw materials of the silicon-based negative electrode active material in some embodiments of this application, the contents and content ratio of the element K and the element Fe in the silicon-based negative electrode active material product, as well as the performance of the battery using the silicon-based negative electrode active material as silicon-based negative electrode active material. The following issues are respectively discussed.

### (1) Composition of raw materials

The raw material elemental silicon used in samples (E1 to E16) is metal silicon 1 (Si≥99.9wt%, K=200 ppm, and Fe=20 ppm).

The raw material elemental silicon used in sample (D1) is metal silicon 2 (Si≥99.9wt%, without K and Fe).

It can be seen from Table 1 that the element K and the element Fe in the silicon-based negative electrode active material may come from various sources:
(a) the element K in the silicon-based negative electrode active material may come from the raw material metal silicon;
(b) the element Fe in the silicon-based negative electrode active material may come from the raw material metal silicon;
(c) the element K in the silicon-based negative electrode active material may come from an additionally added potassium source; and
(d) the element Fe in the silicon-based negative electrode active material may come from an additionally added iron source.

Persons skilled in the art can adaptively adjust the content of the element Fe and the content of the element K in the raw material according to the target chemical composition of the silicon-based negative electrode active material to ultimately obtain a silicon oxide-based compound with the target chemical composition. If it is necessary to increase/decrease the content of the element K in the target silicon oxide-based compound, metal silicon (or silicon oxide) with a higher/lower content of the element K may be used, or the amount of the additionally added potassium source in the raw material may be increased/decreased. If it is necessary to increase/decrease the content of the element Fe in the target silicon oxide-based compound, metal silicon (or silicon oxide) with a higher/lower content of the element Fe may be used, or the amount of the additionally added iron source in the raw material may be increased/decreased.

### (2) Presence of both the element K and the element Fe significantly improves the initial coulombic efficiency and kinetic performance

The silicon-based negative electrode active material in comparative example D1 contains no element K and no element Fe, and has an initial coulombic efficiency value of 65.32% and a direct-current internal resistance of 583.68 mΩ. The silicon-based negative electrode active material in examples E1 to E16 contains both the element K and the element Fe, and has a higher initial coulombic efficiency value of 71.42% to 76.32% and a lower direct-current internal resistance value of 505.86 mΩ to 515.07 mΩ, with significant improvement as compared to D1. It can be seen that the presence of both the element K and the element Fe brings significant improvement in the initial coulombic efficiency and kinetic performance.

### (3) Ratio of K/Fe in silicon-based negative electrode active material

As shown in examples E2 to E14, when the weight ratio of K/Fe is (10-36):1, the initial coulombic efficiency value of the negative electrode active material is 71.76% to 76.32%, and the direct-current internal resistance value is 505.86 mΩ to 515.07 mΩ, exhibiting further improved initial coulombic efficiency and kinetic performance.

As shown in examples E3 to E14, when the weight ratio of K/Fe is 12:1 to 36:1, the initial coulombic efficiency value of the negative electrode active material is 71.82% to 76.32%, and the direct-current internal resistance value is 505.856 mΩ to 515.072 mΩ, exhibiting further improved initial coulombic efficiency and kinetic performance.

As shown in examples E6 to E13, when the weight ratio of K/Fe is 20:1 to 32:1, the initial coulombic efficiency value of the negative electrode active material is 73.23% to 76.32%, and the direct-current internal resistance value is 510.976 mΩ to 514.56 mΩ, exhibiting further improved initial coulombic efficiency and kinetic performance.

### (5) Content of element K and content of element Fe in silicon-based negative electrode active material

As shown in examples E1 to E16, the content of the element K in the silicon-based negative electrode active material is 800 ppm or above, for example, between 800 ppm and 1520 ppm, and the negative electrode active material exhibits improved initial coulombic efficiency and kinetic performance.

As shown in examples E1 to E16, the content of the element Fe in the silicon-based negative electrode active material is 100 ppm or below, for example, between 35 ppm and 100 ppm, and the negative electrode active material exhibits improved initial coulombic efficiency and kinetic performance.

As shown in examples E6 to E13, the content of the element K in the silicon-based negative electrode active material is between 1200 ppm and 1500 ppm, and the negative electrode active material exhibits improved initial coulombic efficiency and kinetic performance.

As shown in examples E6 to E13, the content of the element Fe in the silicon-based negative electrode active material is between 45 ppm and 64 ppm. The negative electrode active material exhibits improved initial coulombic efficiency and kinetic performance.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A silicon-based negative electrode active material, wherein the silicon-based negative electrode active material comprises a silicate containing an alkaline earth metal element, and the silicon-based negative electrode active material contains both the element K and the element Fe.

2. The silicon-based negative electrode active material according to claim 1, wherein a content of the element K is greater than a content of the element Fe.

3. The silicon-based negative electrode active material according to claim 1 or 2, wherein a mass ratio of the element K to the element Fe is greater than or equal to 8:1, optionally 10: 1 to 36:1.

4. The silicon-based negative electrode active material according to any one of claims 1 to 3, wherein the content of the element k is 400 ppm or above, optionally 800 ppm to 2000 ppm.

5. The silicon-based negative electrode active material according to any one of claims 1 to 4, wherein the content of the element Fe is 500 ppm or below, optionally 30 ppm to 400 ppm.

6. The silicon-based negative electrode active material according to any one of claims 1 to 5, having one or more of the following characteristics:
(1) a median particle size by volume Dᵥ50 of the silicon-based negative electrode active material is 4 µm to 10 µm, optionally 5 µm to 8 µm;
(2) a specific surface area of the silicon-based negative electrode active material is 6 m²/g or below, optionally 3 m²/g to 5 m²/g;
(3) a powder volume resistivity of the silicon-based negative electrode active material under a pressure of 4 MPa is 6 Ω·cm or below, optionally 0.5 Ω·cm to 4.5 Ω·cm;
(4) a compacted density of the silicon-based negative electrode active material under a pressure of 49000 N is 1.4 g/cm³ to 1.8 g/cm³, optionally 1.5 g/cm³ to 1.7 g/cm³;
(5) the silicate phase containing an alkaline earth metal element comprises a magnesium-containing silicate, and a half-peak width of the magnesium-containing silicate is less than or equal to 0.60°, optionally 0.35° to 0.55°; and
(6) the silicate containing an alkaline earth metal element comprises a magnesium-containing silicate, and a grain size of the magnesium-containing silicate is less than or equal to 21 nm, optionally 12 nm to 18 nm.

7. The silicon-based negative electrode active material according to any one of claims 1 to 6, wherein at least part of a surface of the silicon-based negative electrode active material is provided with a coating layer.

8. A method for preparing the silicon-based negative electrode active material according to any one of claims 1 to 7, comprising:
providing a raw material containing the element Si, the element O, the element K, the element Fe, and an alkaline earth metal element;
heating the raw material to form vapor by using a vapor deposition method, and then cooling the vapor to form a deposit; and
crushing the deposit to obtain a crushed product.

9. The method according to claim 8, further comprising:
coating the crushed product to obtain a product with a coating layer.

10. The method according to claim 8 or 9, having one or more of the following characteristics:
(1) in the operation of heating the raw material to form vapor, the heating is performed at a temperature of 1100°C to 1550°C; and
(2) in the operation of cooling the vapor to form a deposit, the cooling is performed at a temperature of 700°C to 900°C.

11. A secondary battery, comprising a negative electrode, wherein the negative electrode comprises the silicon-based negative electrode active material according to any one of claims 1 to 7.

12. An electric apparatus, comprising the secondary battery according to claim 11.
